(19) Europäisches Patentamt / European Patent Office / Office européen des brevets

(11) **EP 3 209 850 B1**

(12) **FASCICULE DE BREVET EUROPEEN**

(45) Date de publication et mention de la délivrance du brevet:
**10.07.2019 Bulletin 2019/28**

(21) Numéro de dépôt: **15791328.6**

(22) Date de dépôt: **20.10.2015**

(51) Int Cl.:
***E21B 17/042*** *(2006.01)*

(86) Numéro de dépôt international:
**PCT/FR2015/052815**

(87) Numéro de publication internationale:
**WO 2016/062961 (28.04.2016 Gazette 2016/17)**

(54) **PROTECTEUR DE CONNEXION D'UN COMPOSANT TUBULAIRE**

VERBINDUNGSSCHUTZ FÜR ROHRFÖRMIGES BAUTEIL

TUBULAR COMPONENT CONNECTION PROTECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2014 FR 1460235**

(43) Date de publication de la demande:
**30.08.2017 Bulletin 2017/35**

(73) Titulaire: **Vallourec Oil and Gas France
59620 Aulnoye-Aymeries (FR)**

(72) Inventeurs:
• **AGUILAR MÉNDEZ, José Antonio
94240 Veracruz (MX)**
• **ONTIVEROS CARMONA, David
91897 Veracruz (MX)**
• **VERLEENE, Arnaud
59880 Saint-Saulve (FR)**

(74) Mandataire: **Cabinet Netter
36, avenue Hoche
75008 Paris (FR)**

(56) Documents cités:
EP-A1- 2 126 449    FR-A1- 2 892 174
FR-A1- 2 979 968    US-A1- 2010 038 904
US-E- R E30 647

## Description

L'invention concerne les composants filetés tubulaires et plus précisément les protecteurs de l'extrémité de certains de ces composants, notamment les tubes de forage ou d'exploitation de puits de pétrole ou gaz.

On entend ici par "composant" tout élément ou accessoire utilisé pour forer ou exploiter un puits et comprenant au moins une connexion ou connecteur ou encore extrémité filetée, et destiné à être assemblé par un filetage à un autre composant pour constituer avec cet autre composant un joint fileté tubulaire. Le composant peut être par exemple un élément tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues).

Les composants sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 : 2004 émise par l'International Standardisation Organisation (ISO), régit les tubes utilisés comme casing ou tubing, et la spécification API 5B définit des filetages standards pour ces tubes.

La spécification 7 de l'API définit des connexions filetées à épaulement pour tiges de forage rotatif.

Les fabricants de composants de joints filetés tubulaires ont également développé des joints filetés dits supérieurs (« premium ») qui présentent des géométries spécifiques des filetages, et des moyens spécifiques leur procurant de meilleures performances en service, notamment en matière de résistance mécanique et d'étanchéité.

Les connexions filetées comprennent le plus souvent un ou deux filetages dont les filets sont sensiblement trapézoïdaux et comprennent un flanc d'engagement du côté des filets dirigés vers l'extrémité libre de l'élément fileté considéré, un flanc porteur du côté opposé des filets d'engagement, un sommet de filet de largeur non nulle et un fond de filet de largeur également non nulle, les flancs porteurs et les flancs d'engagement étant d'orientation sensiblement perpendiculaire à l'axe de l'élément fileté (Par exemple, le filet API Buttress présente selon la norme API une inclinaison de +3° pour les flancs porteurs, et une inclinaison de +10° pour les flancs d'engagement).

Il existe également des filets triangulaires ou ronds présentant également des flancs d'engagement et des flancs porteurs dont les sommets et fonds de filets sont de largeur sensiblement nulle, mais qui sont aujourd'hui très peu utilisés car ils présentent un fort risque de désengrènement (« jump-out »).

Les composants précités peuvent comporter une extrémité mâle filetée qui est destinée à être vissée à une extrémité femelle filetée d'un autre composant de forage ou d'exploitation. Il est donc indispensable que leurs extrémités mâle et femelles soient le moins possible endommagées, polluées et détériorées entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation.

Par ailleurs, les extrémités des composants précités étaient généralement enduites juste avant leur assemblage d'une graisse à propriétés anti-grippante.

Il est de plus en plus courant de remplacer cette graisse par une combinaison de traitements de surface et de revêtements apposés en fines couches sur les connexions, c'est-à-dire sur le filetage, sur la portée et/ou sur la butée.

Par exemple, il a été proposé, notamment dans US 6,027,145, EP 1211451 et FR 2892174, de remplacer la graisse appliquée au pinceau en final sur l'extrémité du composant, par une fine couche, d'épaisseur prédéterminée appliquée en usine, d'un lubrifiant sec à base de particules de lubrifiants solides. Les documents FR 2979968 et US Re.30,647 décrivent également les joints filetés.

Ces traitements de surface et revêtements présentent des propriétés de dureté, de lubrification, d'anticorrosion adaptées à la situation de vie de l'assemblage de deux connexions ou à l'état assemblé, et il est nécessaire d'adapter les protecteurs de la connexion hors ces étapes de vie du produit, notamment pendant le stockage, la manutention et le transport, pour préserver la connexion tant d'un enlèvement mécanique que d'une pollution (sable, débris) préjudiciables à l'efficacité du produit.

Les revêtements sont aussi appelés revêtements lubrifiants, et qualifiés de solides ou semi-solides, secs ou semi-secs. Ils présentent des propriétés de viscosité qui s'étendent sur une très large plage, de 500 mPa.s à 25°C à plus de 5000 mPa.s à 25°C, certains sont même qualifiés de « collants », c'est-à-dire qu'après application sur les surfaces de la connexion, ils peuvent adhérer à un objet qui le touche, notamment peuvent migrer sur les doigts d'un opérateur qui effleure la surface revêtue de la connexion. D'autres au contraires sont qualifiés de rigides et présentent une certaine dureté. Ce sont des propriétés recherchées pour faciliter l'assemblage de deux connexions, mais qui posent problème avec les protecteurs de connexions. En effet, ceux-ci devant préserver les connexions des chocs, ils doivent être solidement arrimés à la connexion, et doivent présenter des corps rigides.

Les protecteurs sont des dispositifs dont la fonction est de protéger les surfaces fonctionnelles des connexions mâles ou femelles: Ces surfaces fonctionnelles peuvent être un ou plusieurs filetage(s), une ou plusieurs portée(s), une ou plusieurs butée(s). Un protecteur est de forme générale sensiblement cylindrique et comprend généralement un amortisseur de chocs mécaniques appelé pare-choc situé à l'extrémité opposée à l'extrémité libre du protecteur, un corps, un moyen d'arrimage. La solution généralement adaptée pour arrimer un protecteur sur une connexion est de le visser sur le filetage de la connexion. Cette solution permet un geste de montage simple associé à un positionnement précis. Le protecteur comporte donc un filetage apte à être vissé sur le filetage de la connexion. Le filetage est le plus souvent de même type et de même pas que celui de la connexion. Un filetage de protecteur comprend donc des filets avec des flancs d'engagement du côté des filets orienté vers l'extrémité libre du protecteur et destinés à entrer en contact avec des flancs d'engagement des filets d'une connexion lors du vissage du protecteur sur la connexion, des flancs porteurs, des sommets et fonds de filets.

Aussi, avec l'apparition des traitements de surface et des revêtements apposés sur les connexions, les protecteurs ont été munis de moyens d'étanchéité pour renforcer l'étanchéité à l'humidité ou à l'air des espaces autour des surfaces comprenant les surfaces fonctionnelles d'une connexion.

Cependant, la demanderesse s'est aperçue que lors du transport ou de la manutention de tubes sur lesquels les protecteurs connus sont montés, les surfaces fonctionnelles des connexions sont insuffisamment protégées contre les dégradations, notamment les chocs mécaniques. Il arrive que des protecteurs connus se dévissent partiellement ou totalement ou bien que des surfaces fonctionnelles soient endommagées malgré la présence du protecteur connu monté sur la connexion.

Il a été proposé dans US20100038904 un protecteur pour connexion femelle comprenant un filetage dont les filets présentent une hauteur de filet plus grande que la hauteur de filet de la connexion. Aussi, le filet de base du filetage du protecteur comprend un flanc d'engagement destiné à être en contact avec le flanc d'engagement du filet de base de la connexion femelle et pour lequel l'angle du flanc d'engagement du filet de protecteur est différent de l'angle du flanc d'engagement du filet de la connexion. Ces deux caractéristiques permettent d'une part d'éviter par la différence de hauteur des filets un contact entre fond de filet du protecteur et le sommet de filet de connexion, et ainsi de limiter les détériorations du revêtement sur les sommets de filets du filetage de la connexion, et d'autre part, par la différence d'angle entre flancs en correspondance, de diminuer la surface de contact entre ces flancs d'engagement. Ceci permet de préserver le revêtement d'une portion de la surface des flancs d'engagement de la connexion. Mais cette solution n'est pas entièrement satisfaisante car les efforts s'exerçant entre un flanc d'engagement de filet de protecteur et un flanc d'engagement de filet de connexion se trouvent concentrés sur une portion du flanc d'engagement du filetage de la connexion, et rendent cette zone plus affectée par de possibles dégradations du revêtement.

Il a été proposé dans WO2011/140014 un protecteur dont les filets ont un pas très supérieur aux filets de la connexion, de sorte que les filets de la connexion coupent les filets du protecteur, les filets de la connexion forant la matière des filets du protecteur. Ceci permet de réaliser des économies de production avec un protecteur standardisé face à des connexions qui peuvent présenter différents types de filetages. Mais cette solution n'est pas adaptée pour des connexions aux filets revêtus. En effet, les filets de la connexion coupent la matière des filets de protecteur, générant des copeaux. Les parois des creux formés dans la matière de filets de protecteur et les copeaux vont avoir tendance à racler les flancs de filets de connexion, leurs sommets ou fonds et à retirer la graisse ou le revêtement de la surface desdits filets de la connexion.

Sur un autre plan, il a été proposé par la demanderesse dans EP2126449 un protecteur avec des moyens d'étanchéité flexibles qui présentent une première et deuxième orientations à l'état libre et présentant une troisième et quatrième orientations lorsque le protecteur est à l'état vissé dans une position finale. Cette solution permet d'emmagasiner une énergie anti-dévissage dans les moyens d'étanchéité. Cependant, la fonction de préservation du revêtement de la connexion est insatisfaisante, les surfaces fonctionnelles pouvant encore être détériorées quand le protecteur subit des chocs mécaniques.

L'invention a pour but d'améliorer la situation en préservant le revêtement de la connexion qui y est apposé, que ce soit lors d'une opération de vissage/dévissage du protecteur sur la connexion ou bien sous l'effet des contraintes mécaniques et/ou thermiques que subissent protecteurs et composants tubulaires.

A cet effet, l'invention est un protecteur d'extrémité mâle ou femelle de composant tubulaire pour le forage ou l'exploitation de puits d'hydrocarbures, l'extrémité mâle ou femelle étant munie respectivement d'au moins un filetage externe ou un filetage interne d'une surface annulaire externe et d'une surface annulaire interne séparées par ledit au moins un filetage, le protecteur comprenant au moins un filetage comprenant au moins une première portion filetée comprenant au moins un filet de pas P1 propre à coopérer par vissage avec le filetage de l'extrémité mâle ou le filetage de l'extrémité femelle, et le protecteur comprend une deuxième portion filetée comprenant au moins un filet avec un pas P2 différent de P1, ce qui permet de générer un couple de vissage supplémentaire du protecteur sur la connexion.

Selon un mode de réalisation, le pas P2 est tel que la valeur de P2 obéit à l'équation suivante :

$$P2 = P1 + A \times P1 \text{ avec } A > 0$$

Selon un mode de réalisation, le pas P2 est tel que la valeur de P2 obéit à l'équation suivante :

$$P2 = P1 - A \times P1 \text{ avec } A > 0$$

Ceci permet de répartir le couple de vissage sur des flancs porteurs ou des flancs d'engagement des filets de pas P2 avec respectivement des flancs porteurs ou d'engagement des filets de la connexion.

Selon un mode de réalisation, le filetage externe (4) ou interne (17 ; 26 ; 25) de la connexion présente un intervalle WTC séparant deux filets du filetage externe (4) ou interne (17 ; 26) de la connexion et la valeur du coefficient A est telle que :

$$0 < A \leq WTC / P1$$

Ceci permet de limiter la pression de contact des flancs de filets de pas P1 avec des flancs de filets du filetage de la connexion.

Selon un mode de réalisation, le chaque filet de pas P1 présente une largeur de filet TW1, que le filetage externe (4 ; 25) ou interne (17 ; 26) de la connexion présente un intervalle WTC séparant deux filets du filetage de la connexion et en ce la valeur du coefficient A est strictement supérieure à 0 et inférieure à une valeur Amax déterminée par l'équation suivante :

$$Amax = (WTC - TW1) / P1$$

Ceci permet de limiter encore plus la pression de contact des flancs de filets de pas P1 avec des flancs de filets du filetage de la connexion.

Selon un mode de réalisation, la valeur de A est supérieure à 0,2.

Selon un mode de réalisation, A est compris entre 0,05 et 0,8.

Selon un mode de réalisation, la deuxième portion filetée (39) comprend de 1 à 3 filets de pas P2 et la première portion filetée (38) comprend de 2 à 5 filets de pas P1, ce qui permet de limiter les surfaces en contact entre des filets de protecteur avec des filets de la connexion et de limiter la dégradation éventuelle de ces filets de la connexion.

Selon un mode de réalisation, le protecteur est un protecteur d'extrémité femelle et la deuxième portion filetée (39) est située sur le corps du protecteur en amont de la première portion filetée (38), ce qui permet d'obtenir l'effet sur le couple de serrage alors que le protecteur est déjà partiellement vissé sur la connexion.

Selon un mode de réalisation, au moins un filet de la deuxième portion filetée (39) est apte à être en contact avec au moins un filet imparfait du filetage externe (4 ; 25) ou interne (26) de l'extrémité du composant de joint tubulaire lorsque le protecteur est à l'état vissé sur l'extrémité du composant de joint tubulaire, ce qui permet de préserver des filets dits parfaits du filetage de la connexion.

Selon un mode de réalisation le protecteur comprend un corps principal (20), un joint d'étanchéité interne (32) et un joint d'étanchéité externe (33) agencés pour former des première et seconde étanchéités avec respectivement des surfaces annulaires interne (5 ; 28) et externe (27) de l'extrémité mâle (3) ou femelle (2), ce qui permet de former une zone étanche autour de surfaces fonctionnelles de la connexion.

Selon un mode de réalisation, au moins un des joints d'étanchéité interne (32) ou externe (33) est flexible, ce qui permet de générer une énergie s'opposant au dévissage du protecteur lorsqu'il est à l'état vissé sur la connexion.

Selon un mode de réalisation, le joint d'étanchéité flexible est une collerette annulaire flexible, ce qui permet d'obtenir une énergie s'opposant au dévissage régulièrement répartie.

Selon un mode de réalisation, les deux joints d'étanchéité sont flexibles et sont des collerettes annulaires flexibles, ce qui permet de renforcer considérablement l'énergie anti-dévissage.

Selon un mode de réalisation, le protecteur comprend un deuxième filetage interne ou externe et une troisième portion filetée comprenant au moins un filet de pas P3 différent de P2 et différent de P1, ce qui permet de renforcer l'énergie anti-dévissage.

Un composant tubulaire pour le forage et l'exploitation de puits de pétrole ou gaz est généralement composé d'un corps et de deux connexions de part et d'autre du corps pour connecter le composant tubulaire à d'autres composants tubulaires. Le composant peut être réalisé en acier, en acier inoxydable, et / ou en aluminium.

En particulier, un tube comprend un corps et une connexion à chaque extrémité, de part et d'autre de ce corps. Une connexion peut être une portion d'extrémité du corps munie de surfaces usinées en vue de former un joint avec une connexion correspondante d'un autre corps tubulaire. Alternativement, une connexion peut être une portion usinée d'un manchon rapporté par soudage ou vissage sur un corps de composant tubulaire. Alternativement encore, une connexion peut être un manchon soudé sur un corps de composant tubulaire.

On entend par « connexion mâle » la portion d'un composant munie de surfaces usinées et/ou rectifiées en vue de former un joint avec une connexion femelle correspondante. Une connexion mâle a généralement un ou plusieurs filetage(s) situé(s) sur une paroi latérale extérieure de l'extrémité du composant et une connexion femelle correspondante a un ou plusieurs filetage(s) correspondants sur une paroi latérale intérieure de l'extrémité du composant.

Un composant peut être muni de deux connexions mâles, une connexion mâle et une connexion femelle, ou deux connexions femelles.

Un protecteur a pour but principal de protéger la connexion d'un composant tubulaire (destiné au forage ou à l'exploitation de puits d'hydrocarbures ou similaires) contre divers types d'agression extérieure : les endommagements mécaniques tels que des chocs mécaniques, les pollutions (chimiques et matérielles) telles que des poussières se déposant sur les surfaces fonctionnelles et la corrosion des matériaux entre le moment où le composant tubulaire sort de sa chaîne de fabrication et celui où il est utilisé (avec plusieurs montages-démontages possibles du dispositif de protection).

Un protecteur selon l'invention permet un montage et un démontage sur chantier rapides et fiables du protecteur sur une connexion de composant tubulaire et permet une inspection facile de l'état des filetages avant utilisation ou entre deux utilisations successives du composant. Le protecteur selon l'invention évite la mise en oeuvre de produits additionnels au montage.

Le protecteur selon l'invention permet de préserver lors du montage/démontage sur chantier ou en usine l'état de surface ou le revêtement de surfaces fonctionnelles d'une connexion de composant tubulaire en limitant les contraintes mécaniques exercées par des éléments du protecteur sur des surfaces de la connexion, par exemple par le filetage du protecteur sur le filetage de la connexion du composant.

D'autres caractéristiques et avantages de l'invention apparaîtront à l'examen de la description détaillée ci-après, et des dessins annexés, sur lesquels :

- La figure 1 illustre de façon schématique, une vue en coupe d'une extrémité de composant tubulaire avec manchon.
- La figure 2 illustre de façon schématique, une vue en coupe de deux extrémités de composant tubulaires assemblés.
- La figure 3 illustre de façon schématique, une vue partielle en coupe d'un mode de réalisation de protecteur pour connexion mâle selon l'invention.
- La figure 4 illustre de façon schématique, une vue partielle en coupe d'un protecteur pour connexion femelle d'un mode de réalisation de protecteur selon l'invention.
- La figure 5 illustre de façon schématique un profil trapézoïdal d'un filet de filetage d'un protecteur de connexion femelle et d'un filetage de connexion tubulaire femelle.
- La figure 6 est une vue de détail de la figure 4 en coupe de portions de filetages d'un protecteur selon un mode de réalisation de l'invention et d'une connexion.

Les dessins annexés pourront non seulement servir à compléter l'invention, mais aussi contribuer à sa définition, le cas échéant. Ils ne sont pas limitatifs quand à la portée de l'invention.

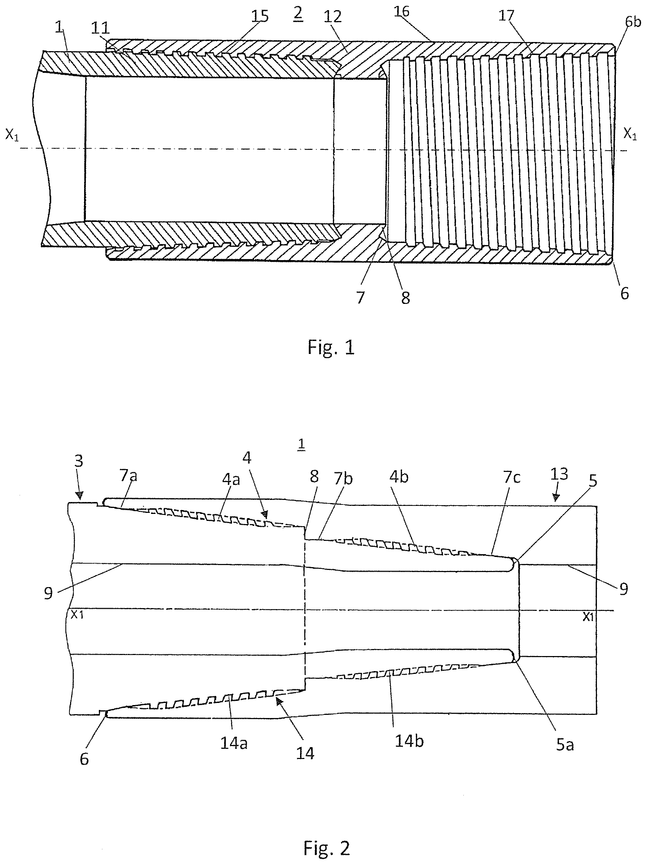

L'extrémité femelle (2) de la figure 1 comprend un corps tubulaire (1) comprenant une portion filetée (11), et un manchon (12) comprenant un premier filetage intérieur (15) destiné à être vissé sur la portion filetée (11) du corps du tube, une connexion femelle (16) comprenant un deuxième filetage intérieur (17) destiné à être vissé sur la connexion mâle d'un autre composant tubulaire. La connexion de la figure 1 est du type « fileté & couplé » (« Threaded & Coupled » ou « T&C »), dans laquelle un manchon est rapporté sur le tube.

Le filetage intérieur (17) et un filetage d'une connexion mâle correspondante peuvent chacun comprendre des filets parfaits et des filets évanouissants ou imparfaits.

La connexion femelle (16) comprend également une surface d'étanchéité (7) en amont du filetage, une surface de butée (8) en amont du deuxième filetage intérieur (17), et une surface annulaire extérieure d'extrémité (6) comprenant une butée d'extrémité (6b), en aval du deuxième filetage intérieur (17).

Un protecteur selon l'invention peut être utilisé pour une connexion mâle ou femelle de joint fileté tubulaire, par exemple de type T&C et qui peut comprendre par exemple les éléments suivants pris individuellement ou en combinaison :

- un filetage conique avec une sous-partie à filets parfaits entourée de deux sous-parties à filets évanouissants ;
- une surface de butée constituée par la surface annulaire transversale de la partie terminale libre de l'extrémité mâle ;
- une surface d'étanchéité métal/métal sur la surface périphérique extérieure/intérieure de la partie terminale libre.

Le joint fileté (1) de la figure 2 présente un axe $X_1$, un alésage (9) et comprend une connexion femelle (13) et une connexion mâle (3). Le filetage extérieur (4) de la connexion mâle (3) comprend un filetage amont (4a) et un filetage aval (4b). La connexion mâle comprend une extrémité (5), des surfaces d'étanchéité (7a, 7b, 7c) et une surface de butée (8). Le filetage intérieur (14) de la connexion femelle comprend un filetage intérieur aval (14a) et un filetage intérieur amont (14b) correspondant aux filetages extérieurs amont (4a) et aval (4b).

Deux filetages d'une même connexion mâle ou femelle peuvent être distincts radialement et/ou axialement l'un de l'autre, réalisés sur une même surface cylindrique ou conique ou sur des surfaces coniques ou cylindriques différentes. Les deux filetages peuvent être séparés par une surface de butée (8) et/ou au moins une surface d'étanchéité (7b), ou alternativement simplement par une surface cylindrique de liaison.

Lorsqu'un filetage est conique, celui-ci peut être subdivisé en une sous-partie dite à filets parfaits, dont la hauteur est sensiblement constante et une sous-partie dite à filets évanouissants ou imparfaits, dont la hauteur est progressivement décroissante et dont le profil peut présenter des irrégularités ou imperfections de manière à ménager un jeu entre les sommets et les fonds de filets. Des filets imparfaits n'encaissent quasiment pas d'efforts de vissage dans la mesure où ils n'entrent pas en contact avec des surfaces des filets de la partie conjuguée.

Les filetages (4a), (4b), (14a), (14b) des connexions peuvent chacun comprendre des filets parfaits et des filets évanouissants ou imparfaits.

La connexion mâle (3) du composant se termine par une surface annulaire intérieure d'extrémité (5), d'orientation sensiblement transversale, pouvant être une extrémité libre (5a), comme représenté sur la figure 2. La connexion femelle (13) se termine par une surface annulaire extérieure d'extrémité (6) d'orientation sensiblement transversale.

Une connexion mâle (3) peut également comprendre une ou plusieurs surfaces de butée axiale en correspondance avec des surfaces de butée axiale correspondantes d'une connexion femelle (13). Ces surfaces de butée peuvent être situées en extrémité libre (5) et (6), en amont du filetage et/ou entre deux parties filetées.

Un premier élément d'un composant est en aval d'un deuxième élément d'un composant quand le premier élément est axialement positionné plus près de l'extrémité libre du composant. Un premier élément d'un composant est en amont d'un deuxième élément d'un composant quand le premier élément est axialement positionné plus loin de l'extrémité libre du composant.

Une connexion mâle (3) peut également comprendre une ou plusieurs surfaces d'étanchéité métal/métal en correspondance avec des surfaces d'étanchéité d'une connexion femelle (en aval du filetage, en amont du filetage ou entre deux parties filetées).

L'exemple de joint tubulaire de la figure 2 est relatif à un joint fileté tubulaire intégral qui peut comprendre les éléments suivants pris individuellement ou en combinaison:

- deux filetages coniques avec chacun une sous-partie à filets parfaits entourée de deux sous-parties à filets évanouissants ;
- une surface de butée constituée par la surface annulaire transversale de la partie intermédiaire entre deux filetages de l'extrémité ;
- deux surfaces d'étanchéité métal/métal, l'une sur la surface périphérique extérieure/intérieure de la partie terminale libre, l'autre sur la surface périphérique extérieure/intérieure adjacente au corps du composant tubulaire.

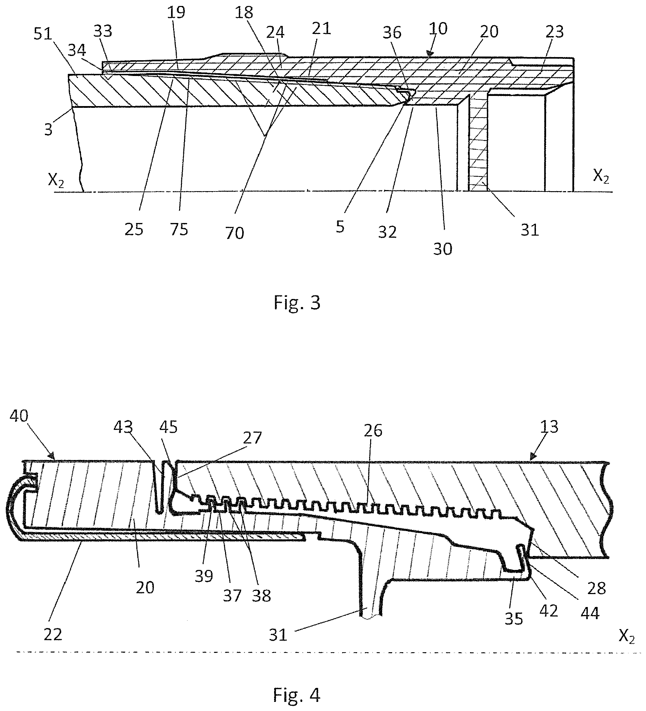

Sur la figure 3 le protecteur (10) est de forme généralement cylindrique d'axe X₂, qui coïncide sensiblement avec l'axe X₁ de la connexion lorsque le protecteur est dans une position finale vissé sur la connexion, et comprend un corps (20), un pare-choc (23), un dispositif d'étanchéité interne (32) et un dispositif d'étanchéité externe (33) coopérant avec des surfaces de la connexion mâle (3) d'un composant tubulaire pour créer des barrières étanches. Le protecteur (10) comprend en outre un filetage (21) apte à être vissé sur un filetage externe (25) de connexion mâle (3).

Le dispositif d'étanchéité interne (32) comprend une lèvre rigide annulaire (36) contactant une surface annulaire intérieure d'extrémité libre (5) de la connexion (3). La lèvre rigide annulaire contacte sur une circonférence la surface de l'extrémité libre (5) de la connexion de manière à créer une barrière aux liquides, à l'humidité et aux poussières.

Le dispositif d'étanchéité externe (33) comprend une lèvre rigide (34) contactant la surface extérieure (51) de la connexion sur une circonférence, de manière à créer une barrière aux liquides, à l'humidité et aux poussières.

Les deux dispositifs d'étanchéité interne (32) et externe (33) forment donc deux barrières et permettent avec le corps du protecteur et la connexion de créer une zone étanche aux liquides, à l'humidité et aux poussières. En particulier, cette zone étanche protège contre la corrosion un ou plusieurs des éléments suivants pris unitairement ou en combinaison : un filetage de connexion, une surface d'étanchéité ou de butée.

Le corps (20) présente une certaine rigidité tout en étant capable d'absorber au moins partiellement les chocs. Pour ce faire, le corps (20) peut par exemple être réalisé en matériau polymère, par injection d'un matériau thermoplastique dans un moule adapté. Parmi les différentes familles de matériaux thermoplastiques qui peuvent être avantageusement utilisées, on peut notamment citer les mélanges à base de polycarbonate comme le polycarbonate-polyester (PC-PBT ou PC-PET) et les polyéthylènes (PE) à haute (PE-HD) ou ultra haute densité (PE-UHD).

Dans les cas où l'on veut obéir à la spécification API 5CT édition 2005 qui prévoit dans son annexe I des exigences pour les dispositifs de protection de filetages, notamment des valeurs minimales de résistance aux chocs axiaux et de biais (à 45°) pour trois températures (-46, +21 et +66°C), on peut par exemple plus particulièrement choisir un PE-HD produit par la société DOW et vendu sous le nom DMBA-8904-NT7 ou produit par la société BASELL et vendu sous le nom LUPOLEN 4261 AG UV 6005, un PE-UHD produit par la société TICONA et vendu sous le nom GUR 5113, ou un PC-PBT produit par la société BAYER et vendu sous le nom MAKROBLEND S7916.

On notera que le corps peut être éventuellement partiellement alvéolé, notamment dans ses portions épaisses, afin de mieux absorber les coups.

Sur la figure 3, les moyens d'étanchéité sont dans le même matériau polymère que le corps du protecteur et réalisés par moulage et usinage directement dans la matière du corps du protecteur. Les moyens d'étanchéité peuvent alternativement être rapportés sur le corps du protecteur, par vissage, collage ou encliquetage. Les moyens d'étanchéité peuvent alternativement être réalisés en un matériau plus souple que le matériau du protecteur, par exemple un élastomère.

Le corps (20) comprend également une cloison radiale (31) formant bouchon et disposée dans l'alésage (30) du corps de protecteur. Dans une variante non représentée, la cloison radiale (31) est munie d'ouvertures, voire même est inexistante. Dans les modes de réalisation représentés, la cloison radiale (31) obture l'espace intérieur de la partie aval (24).

Le corps (20) peut également être renforcé par un renfort interne ou externe ou intégré dans la masse. Un exemple de renfort est illustré en figure 4, sous la forme d'une jupe métallique (22), pour renforcer la rigidité ou améliorer la résistance aux chocs du protecteur.

Le protecteur (10) comprend en outre un filetage de protecteur (21) apte à être vissé sur un filetage de connexion de composant tubulaire.

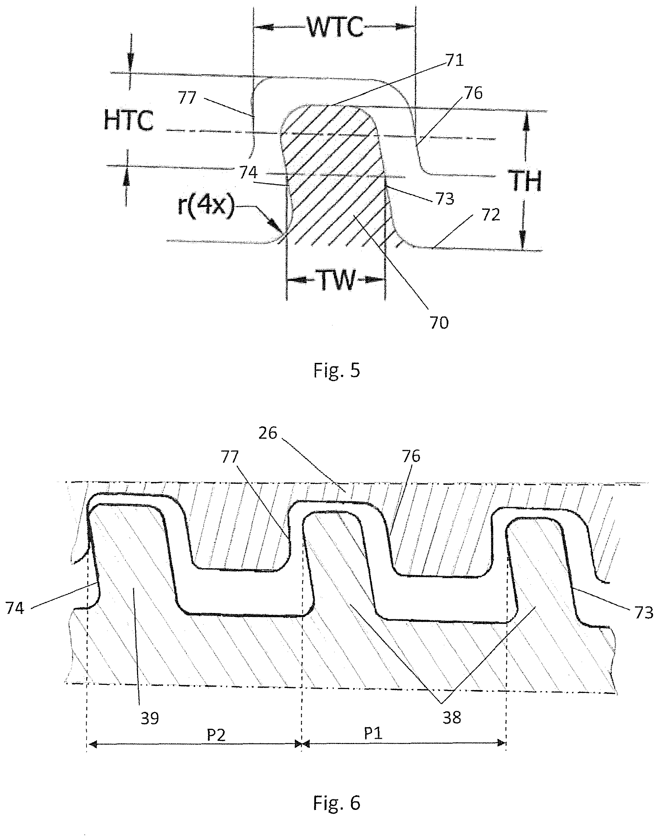

Un filetage de protecteur (21) comprend une succession de filets (70) du type représenté en figure 5. Chaque filet s'étend au maximum sur un tour et la succession de filets forme un filetage. Un filet présente une section de base qui comprend, comme représenté sur la figure 5 suivant une coupe longitudinale passant par l'axe de révolution ($X_2$) du protecteur, un sommet de filet (71), un fond de filet (72), un flanc porteur (74), un flanc d'engagement (73), et présentant une largeur de filet (TW), une hauteur de filet (TH) et un pas du flan d'engagement. Un pas d'un filet est la distance séparant une forme de base du filet et sa plus proche répétition trouvée par translation suivant une génératrice d'un cylindre d'axe ($X_2$). Ledit cylindre est un cône lorsque l'on parle de filetage conique.

En particulier, on peut définir pour un filet un pas moyen de filet correspondant à la distance entre deux répétitions sur une génératrice d'un point moyen du filet qui est situé à mi-largeur de filet TW/2. On peut également définir un pas de flanc porteur de filet, un pas de flanc d'engagement de filet. Un pas de flanc porteur ou d'engagement correspond à la distance entre la répétition d'un point à une hauteur de filet avec le point suivant à la même hauteur de filet. Un pas de flanc d'engagement peut être différent d'un pas de flanc porteur. Si la section de base du filet ne varie pas en largeur, et le pas est constant, alors le pas du filet d'engagement correspond au pas du filet porteur qui correspond au pas de filet moyen.

Dans le cas d'un filetage non continu ou d'un filet unique, il est possible de déterminer le pas d'un filet en mesurant l'avance dudit filet sur une portion de tour et ensuite de déterminer quelle serait l'avance du filet sur un tour complet, ce qui est équivalent au pas du filet. Par exemple, si le filet avance de 0,2 mm sur un quart de tour, alors l'avance du filet sur un tour est de 0,8 mm ;

le pas du filet est donc de 0,8 mm.

Un filet de protecteur présente une largeur de filet (TW) inférieure à la largeur de l'intervalle (WTC) séparant deux filets du filetage de la connexion, pour permettre le vissage desdits filets sur la connexion. De plus, la largeur de filet de protecteur est le plus souvent donnée comme un pourcentage de la largeur de filet du filetage de la connexion. La valeur de ce pourcentage est souvent comprise entre 50% et 90%. Une largeur de filet est mesurée à mi-hauteur du filet.

En particulier, un filet de pas P1 présente une largeur TW1.

Le filetage (21) du protecteur comprend une première portion filetée (18) comprenant une pluralité de filets (70) avec un premier pas P1, et une deuxième portion filetée (19) comprenant au moins un filet (75) avec un deuxième pas P2 distinct de P1.

La deuxième portion filetée (19) est située en aval de la première portion filetée.

Le pas P1 correspond sensiblement au pas du filetage de la connexion tubulaire, ce qui permet au protecteur d'être vissé sans difficulté à ladite connexion tubulaire. Le pas P2 ne correspond donc pas au pas du filetage de la connexion tubulaire.

Cette différence de pas entre le pas P1 et le pas P2 permet de verrouiller à un moment du vissage le protecteur sur la connexion. En effet, lors du vissage du protecteur sur une connexion mâle (3), dans une première étape, les flancs d'engagement des filets du filetage de protecteur (21) de pas P1 sont en contact avec les flancs d'engagement du filetage de la connexion mâle. Dans un deuxième temps, la deuxième portion filetée (19) avec au moins un filet de pas P2 vient en contact du filetage interne (21, 26) de la connexion mâle. Le couple de vissage augmente alors d'une quantité supérieure à celle de la simple addition d'une surface supplémentaire de flanc de filet en frottement sur le filetage de la connexion, car les filets sont mis en contrainte, déformés, ce qui accroît la force subie par un flanc de filet de protecteur et exercée par un flanc de filet de connexion, ce qui accroît donc le couple de vissage du protecteur sur la connexion.

Ainsi, un protecteur selon l'invention empêche la propagation de certains chocs que subit un protecteur pendant la manutention jusqu'aux filets du protecteur et dégrader le revêtement de la connexion. Les revêtements des connexions sont mieux préservés.

Dans une variante, le pas P2 est plus grand que le pas P1. Les flancs porteurs des filets de la deuxième portion filetée (19) entrent en contact avec des flancs porteurs du filetage de la connexion tubulaire, une pression de contact supplémentaire est créée et exercée par le filetage de la connexion tubulaire sur le filetage du protecteur. Cette pression est due d'une part par la surface de contact supplémentaire créée entre les filetages mais surtout par la contrainte exercée par le filetage de la connexion au travers du filetage du protecteur. Il en résulte un accroissement soudain du couple de vissage du protecteur lorsque le ou les filet(s) de pas P2 engagent le filetage de la connexion tubulaire, et il en résulte également un meilleur maintien en position du protecteur, le couple de dévissage s'en trouvant de la même manière accru.

Dans un mode de réalisation, la valeur de P2 est telle que P2 = P1 + (A x P1). A est un coefficient de variation de pas. Le produit du coefficient de variation de pas A par le pas P1 représente le décalage de pas. A est un chiffre réel non nul.

Dans une variante, le coefficient A est strictement supérieur à 0 et inférieur à une valeur telle que le décalage de pas est inférieur à la distance WTC séparant deux filets de la connexion ; le coefficient A est tel que :

$$0 < A < WTC / P1.$$

Dans une autre variante, le coefficient A étant strictement supérieur à 0 et inférieur à une valeur telle que le décalage de pas est inférieur à la différence entre la distance WTC séparant deux filets de la connexion et la largeur TW1 du filet de pas P1, différence divisée par le pas P1, soit tel que :

$$0 < A < (WTC- TW1) / P1$$

Ainsi, on peut obtenir lorsqu'un protecteur selon l'invention est à l'état vissé sur la connexion, que les flancs des filets de pas P1 présentent une très faible pression de contact ou une pression de contact nulle sur les flancs des filets de la connexion. Cette définition est particulièrement adaptée lorsque le pas P2 est obtenu par variation de la largeur du filet de pas P2 par rapport à la largeur d'un filet de pas P1, qui présente alors une largeur TW2 différente de la largeur TW1 d'un filet de pas P1.

Dans un mode de réalisation le coefficient A est de valeur comprise entre 0,1 et 0,8. Cette fourchette correspond à des valeurs permettant d'obtenir l'effet recherché sur la plupart des dimensions de connexion courantes.

Préférentiellement, la valeur de A est supérieure à 0,2 quelle que soit la valeur maximale de A choisie. L'effet de résistance au dévissage accidentel est renforcé.

Le nombre de filets requis pour appliquer un couple de vissage du protecteur sur la connexion suffisant pour diminuer les risques de dévissage intempestif est ainsi diminué. La quantité de surfaces de filets du protecteur en contact avec les surfaces de filet de la connexion lorsque le protecteur est à l'état vissé est alors également diminuée. Les graisses ou revêtements appliqués sur les surfaces des filets sont donc moins détériorées en cas de choc.

La protection assurée par le protecteur selon l'invention à l'état monté sur la connexion est aussi moins sensible aux variations de la température. En effet, un composant pour le domaine du forage et des puits de pétrole est amené à pouvoir être stocké dans des régions ensoleillées aux températures chaudes ou des régions aux températures polaires. Le protecteur et la connexion subissent des variations dimensionnelles d'ampleur différentes, qui peuvent amener des sous-éléments des protecteurs et connexion en contact les uns avec les autres à bouger les uns par rapport aux autres, par exemple des portions de filets du protecteur par rapport à des portions de filets de la connexion. Un protecteur selon l'invention et subissant des températures extrême préserve les filets de la connexion.

Dans un mode de réalisation alternatif, le filetage de protecteur (21) comprend une première portion filetée (18) comprenant une pluralité de filets avec un pas P1 de largeur de filet TW1, et une deuxième portion filetée (19) comprenant au moins un filet avec un pas P2 plus petit que P1 tel que P2 = P1 - (A x P1), le coefficient A étant strictement supérieur à 0 et inférieur à (WTC-TW1) /P1. Alternativement, A est strictement supérieur à 0 et inférieur à WTC/P1. Alternativement encore, A est compris entre 0,05 et 0,8.

Le flanc d'engagement de pas P2 est décalé vers la surface d'un flanc d'engagement de filet de la connexion par rapport à un flanc d'engagement d'un filet de pas P1. La pression de contact des filets de pas P1 sur les filets de la connexion est diminuée alors que la pression de contact entre les flancs d'engagement (73) des filets de pas P2 avec les flancs d'engagement (76) du filetage de la connexion tubulaire est accrue pour un résultat sensiblement identique d'augmentation du couple de vissage/dévissage. La pression de contact entre le filetage de la connexion et les flancs d'engagement des filets de pas P1 est diminuée de sorte que le revêtement apposé sur la surface en contact avec les flancs d'engagement des filets de pas P1 soit moins susceptible d'être détériorée.

De préférence, les filets de pas P2 sont en contact avec les filets dits imparfaits de la connexion.

Un protecteur selon l'invention pour connexion femelle est représenté à l'état vissé sur la figure 4. La connexion femelle (13) comprend une surface annulaire interne (28), une surface annulaire externe (27) et un filetage interne (26). Le protecteur pour connexion femelle (40) comprend un corps (20), un filetage externe (37), un joint d'étanchéité flexible interne (42) et un joint d'étanchéité flexible externe (43).

Le protecteur pour connexion femelle (40) est représenté sur la figure 4 avec les options d'un renfort métallique (22) destiné à améliorer la rigidité et la résistance au choc du protecteur (40), et d'une cloison radiale (31) formant bouchon.

Les premier et deuxième joints d'étanchéité interne (42) et externe (43) sont annulaires et flexibles. On entend par flexible que les joints d'étanchéité sont déformables par flexion axiale afin d'acquérir par contact de surface avec les surfaces annulaires interne (28) et externe (27) de la connexion une énergie s'opposant partiellement au dévissage accidentel et maintenant une pression de contact entre le joint d'étanchéité et la surface annulaire de la connexion de manière à obtenir et maintenir une étanchéité.

Comme illustré sur la figure 4, le joint d'étanchéité interne (42) est une projection radiale vers l'extérieur en forme de collerette (ou languette ou encore lamelle), destinée à être en contact contre une surface annulaire interne (28) de la connexion femelle (13), afin d'assurer une étanchéité continue locale sur toute sa circonférence lorsque le protecteur est placé à l'état vissé dans sa position finale. De préférence, la collerette (42) est intégrale au corps (20) du protecteur. La collerette (42) est reliée au corps du protecteur par une portion de liaison au corps du protecteur de section réduite (45). La collerette et sa portion de liaison au corps du protecteur présentent une section de forme en L ou bien alternativement en V si la portion de liaison est de longueur réduite. La collerette présente une face (44) d'orientation choisie pour minimiser la surface de contact avec la surface annulaire interne (28), d'une part afin de privilégier une pression de contact plus grande que celle qui pourrait être obtenue si la surface de contact entre la face (44) et la surface annulaire interne (28) est plus grande, et d'autre part pour minimiser une éventuelle dégradation du revêtement ou du traitement de surface qui serait appliqué sur la surface annulaire interne (28).

Le joint d'étanchéité externe (43) est une projection radiale vers l'extérieur en forme de collerette (ou languette ou encore lamelle), destiné à être en contact contre une surface annulaire externe (27) de la connexion femelle (13), afin d'assurer une étanchéité continue locale sur toute sa circonférence lorsque le protecteur est placé à l'état vissé dans sa position finale. De préférence, la collerette (43) est intégrale au corps (20) du protecteur. La collerette (43) présente une hauteur mesurée radialement et une épaisseur mesurée axialement, prise à mi-hauteur dans le sens axial, telles que le rapport hauteur à épaisseur est supérieur à 1, préférentiellement supérieur à 3. Ainsi, la collerette peut présenter une première inclinaison à l'état libre et une deuxième inclinaison en flexion axiale lorsque le protecteur est placé à l'état vissé dans sa position finale. De préférence, la collerette (43) présente une face arrondie (45) qui permet d'une part de minimiser la surface de contact entre la collerette (43) et la surface annulaire externe (27) afin de privilégier la pression de contact et de minimiser les risques de détérioration du traitement de surface ou du revêtement appliqué sur la surface annulaire externe (27) et d'autre part de privilégier un roulement sans glissement, soit sans frottement, de la collerette sur la surface annulaire externe, afin aussi d'éviter des dégradations du traitement de surface ou du revêtement. Cette géométrie diminue fortement les risques de perte de contact lorsque la qualité de la surface est dégradée et les tolérances dimensionnelles de la connexion sont larges.

Le filetage externe (37) comprend une première portion filetée (38) comprenant deux filets de pas P1 et une deuxième portion filetée (39) comprenant au moins un filet de pas P2 différent de P1.

La valeur de P2 est telle P2 = P1 + (A x P1), le coefficient A étant strictement supérieur à 0 et inférieur à une valeur telle que le décalage de pas est inférieur à la différence entre la distance WTC séparant deux filets de la connexion et la largeur TW1 d'un filet de pas P1, soit tel que :

$$0 < A < (WTC- TW1)/P1$$

Alternativement, le coefficient A est compris entre 0,1 et 0,8. La valeur du coefficient A dépend de la taille de la connexion et des caractéristiques du filetage de la connexion et du filetage du protecteur.

La première portion filetée (38) peut comprendre de 1 à 5 filets à pas P1.

Le vissage du protecteur (40) sur la connexion femelle (13) se décompose alors selon les étapes suivantes :

- Dans une étape de premier engagement, les filets de pas P1 sont appuyés par leurs flancs d'engagement sur les flancs d'engagement des filets du filetage de la connexion.
- Dans une étape de contact, la collerette (42) est mise en contact avec la surface annulaire interne (28) puis déformée par flexion.
- Dans une étape de déformation, les flancs porteurs (74) des filets de pas P1 entrent en contact avec les flancs porteurs (77) du filetage de la connexion. En effet, la déformation de la collerette (42) repousse le corps du protecteur vers l'aval de la connexion, le mouvement du protecteur est alors limité par les filetages du protecteur engrenés dans les filetages de la connexion. La surface annulaire interne (28) continue d'être déformée par flexion pendant le vissage du protecteur.
- Dans une étape de deuxième engagement, au moins un filet de pas P2 engrène le filetage de la connexion, et entre en contact avec le filetage interne (26) de la connexion femelle. Du fait du décalage de pas du filet P2, la pression de contact des flancs porteurs (74) des filets de la première portion filetée (38) diminue.
- Dans une étape de diminution de pression de contact, optionnelle et préférentielle avec ce mode de réalisation du protecteur, la pression de contact des flancs porteurs de filets de la première portion filetée (38) diminue jusqu'à devenir nulle et ils ne sont plus en contact avec les flancs porteurs (77) de filets de la connexion femelle. Les flancs d'engagement de filets de la première portion filetée (38) peuvent ne pas être en contact avec des flancs d'engagement du filetage de la connexion avec une valeur de A convenablement choisie.

- Dans une étape de verrouillage, la collerette externe entre en contact avec la surface annulaire externe (27) de la connexion. Des filets de pas P2 de la deuxième portion filetée (39) sont déformés.

Au cours de l'étape de verrouillage, des flancs porteurs de filets de la première portion filetée (38) peuvent entrer en contact avec des flancs porteurs du filetage de la connexion, mais avec une pression de contact plus faible que celle exercée par les surfaces des flancs de filets de la deuxième portion filetée (39) sur les surfaces de filets de la connexion.

De préférence, les filets de pas P2 de la première portion filetée (38) sont en contact avec les surfaces des filets imparfaits du filetage (26) de la connexion (2) lorsque le protecteur (40) est à l'état vissé sur la connexion (2).

Ainsi, dans ce mode de réalisation, pour lequel le protecteur est muni de moyens d'étanchéité flexibles, le protecteur est soumis à un premier effort dans une première direction axiale sur le corps du protecteur, orientée vers l'aval de la connexion, du fait de l'effort exercé par les surfaces annulaires sur les moyens d'étanchéité flexibles du protecteur, et le protecteur est soumis à un effort dans une deuxième direction axiale opposée au premier effort de première direction axiale, exercé par au moins un flanc porteur de filetage de connexion sur au moins le flanc porteur du filet de pas P2 ce qui permet d'emmagasiner de l'énergie s'opposant à tout mouvement de vissage / dévissage dû aux vibrations durant le transport. Les filets de pas P1 sont maintenus en position avec une force de contact diminuée de la force de contact du filet de pas P2, voire une force de contact avec les filets de la connexion qui est nulle. Les risques de détérioration des revêtements appliqués sur un filetage par les filets de pas P1 est fortement diminué.

Ainsi, un protecteur selon l'invention résiste mieux au dévissage accidentel, qu'il soit partiel ou total, lorsqu'il subit des vibrations, lors du transport de tubes sur lesquels des protecteurs sont montés, ou lors de la manutention de ces tubes. La protection de la connexion du tube est plus fiable.

La figure 6 illustre une étape de diminution de pression de contact lors du vissage du protecteur (40) sur la connexion femelle (13) au niveau du filetage du protecteur (40). Les première et deuxième portions filetées (38) et (39) ne sont pas représentées avec des filets dont les sommets de filets sont en contact avec les fonds de filets de la connexion, mais il peut y avoir contact, en fonction de la température à laquelle sont exposés protecteur et connexion.

Chaque filet des première et deuxième portions filetées (38) ou (39) comprend un flanc d'engagement (73) et un flanc porteur (74). Chaque filet du filetage (26) de la connexion femelle présente également un flanc d'engagement (76) et un flanc porteur (77). Dans cette étape de diminution de pression de contact lors du vissage, le flanc porteurs du filet de pas P2 est en contact avec un flanc porteur du filetage de la connexion et le pas P2 est tel que les flancs porteurs des filets de pas P1 ne sont plus en contact avec les flancs porteurs de la connexion. En effet, le décalage de pas entre le filet de pas P1 et le filet de pas P2 est inférieur à la différence entre la distance WTC séparant deux filets de protecteur et la largeur TW1 des filets de pas P1, c'est-à-dire que A est strictement supérieur à 0 et inférieur à Amax tel que

$$Amax = (WTC - TW1) / P1$$

Les flancs d'engagement des filets ne sont pas non plus en contact avec les flancs d'engagement des filets de la connexion. Les revêtements ou traitements de surface du filetage de la connexion sont préservés pendant le stockage, la manutention et le transport au niveau des flancs de filets.

De préférence, le au moins un filet de pas P2 est positionné de manière à coopérer avec des filets imparfaits de la connexion lorsque le protecteur est à l'état vissé sur la connexion. Ces filets sont moins sollicités lors de l'utilisation de la connexion dans les puits de pétrole, les conséquences d'une dégradation de leur revêtement ou de leur traitement de surface est moindre que pour des filets parfaits.

Le protecteur peut être muni de plus d'un filet à pas P2, ce qui permet d'augmenter l'effort total exercé sur l'ensemble des filets à pas P2, ou de diminuer les pressions de contact au niveau de cet ensemble de filets à pas P2. Le protecteur peut comprendre 1,5 filets à pas P2. Le protecteur peut aussi comprendre par exemple de 2 à 4 filets de pas P2.

Dans un mode de réalisation de l'invention, un filetage (21) ou (37) comprend 5 filets avec un pas P1 et 2 filets avec un pas P2. L'avantage de cette solution est de mieux répartir les contraintes appliquées sur les revêtements d'un filetage de connexion (4) ou (26).

Selon un mode de réalisation d'un protecteur selon l'invention adapté à une connexion mâle ou femelle comprenant deux filetages du type représenté sur la figure 2, c'est-à-dire une connexion mâle ou femelle comprenant deux filetages (4a, 4b) en lieu et place d'un unique filetage (25 ; 26) ; le protecteur peut comprendre un filetage (21) ou bien deux filetages destinés à coopérer respectivement avec les filetages (4a) et (4b) de la connexion. La première portion filetée comprenant au moins un filet de pas P1 et la deuxième portion filetée comprenant au moins un filet de pas P2 peuvent être comprises dans chaque filetage amont et aval de protecteur ou dans au moins un des deux filetages amont et aval de protecteur.

Par exemple, chaque filetage parmi les filetages amont ou aval peut comprendre 2 à 3 filets avec un pas P1 et un filet avec un pas P2. Ou bien un seul filetage parmi le filetage amont ou le filetage aval peut comprendre un filetage de filets à pas P1 et un filetage de filets à pas P2. L'avantage de cet aspect de l'invention est de limiter la portion de filetage (4) qui pourrait voir son revêtement endommagé par les filets du protecteur.

Dans une variante, le filetage amont et le filetage aval comprennent une première portion filetée avec un ou plusieurs filets avec un pas P1, l'un des deux filetages amont ou aval comprenant une deuxième portion filetée avec au moins un filet avec un pas P2 tel que P2=P1 + AxP1 et l'autre filetage parmi les filetages amont et aval comprenant une troisième portion filetée avec au moins un filet avec un pas P3 tel que P3= P1 - B x P1. A et B sont deux coefficients strictement supérieurs à 0. A et B sont inférieurs à 0,8. Préférentiellement A et B sont inférieurs à la valeur de Amax.

Avantageusement, dans ce mode de réalisation, en fin de vissage du protecteur sur l'extrémité du composant, de(s) flanc(s) porteur(s) (74) de filets de pas P2 viennent en contact avec des flancs porteurs de filetage alors que des flancs d'engagement des filets de pas P3 viennent en contact avec des flancs d'engagement de filetage. Lorsque les filets de pas P2 et les filets de pas P3 viennent en engagement respectivement des filetages (4b) et (4a), les contraintes imposées simultanément par ces filets augmentent le couple nécessaire à imposer au protecteur pour le visser sur la connexion, ou le dévisser, le sécurisant ainsi en position. Le choix de positionnement des filets à pas P2 et des filets à pas P3 se fait selon que l'on veut augmenter la pression de contact sur les filets à pas P1 ou au contraire diminuer les pressions de contact desdits filets de pas P1, tel qu'il l'a été expliqué pour des modes de réalisation liés aux figures 3 et 4.

Le décalage de pas du filet de pas P2 peut être obtenu au niveau d'un flanc d'engagement ou au niveau d'un flanc porteur. Il peut être obtenu en faisant varier le pas moyen du filet, ou bien il peut être obtenu par une variation de sa largeur TW, ou bien une combinaison des deux moyens d'obtention. Ne faire varier que le pas du filet en conservant une section constante de l'ensemble des filets est une solution moins coûteuse à réaliser du fait d'un usinage plus simple que celui faisant intervenir une variation de section du filet.

Les dimensions du protecteur et les positionnements relatifs du (ou des) filet(s) de pas P2, des collerettes d'étanchéité, sont choisis en fonction de la géométrie et des dimensions de la connexion. En pratique les positions et dimensionnements peuvent être calculés à partir des dimensions de la connexion et par rapport à des surfaces de références de la connexion dépendant de la géométrie de ladite connexion, selon les pratiques de calcul connues de l'homme du métier.

## Revendications

**1.** Protecteur (10) d'extrémité mâle (3) ou femelle (2) de composant tubulaire pour le forage ou l'exploitation de puits d'hydrocarbures, l'extrémité mâle ou femelle étant munie respectivement d'au moins un filetage externe (4 ; 25) ou un filetage interne (17 ; 26), d'une surface annulaire externe (27) et d'une surface annulaire interne (28) séparées par ledit au moins un filetage, le protecteur (10) comprenant au moins un filetage (21) comprenant au moins une première portion filetée (38) comprenant au moins un filet de pas P1 propre à coopérer par vissage avec le filetage (4) de l'extrémité mâle (3) ou le filetage (26) de l'extrémité femelle (2), et **caractérisé en ce que** le protecteur comprend une deuxième portion filetée (39) comprenant au moins un filet avec un pas P2 différent de P1.

**2.** Protecteur selon la revendication 1, **caractérisé en ce que** le pas P2 est tel que la valeur de P2 obéit à l'équation suivante :

$$P2 = P1 + A \times P1 \ avec \ A > 0$$

**3.** Protecteur selon la revendication 1, **caractérisé en ce que** le pas P2 est tel que la valeur de P2 obéit à l'équation suivante :

$$P2 = P1 - A \times P1 \ avec \ A > 0$$

**4.** Protecteur selon la revendication 2 ou 3, **caractérisé en ce que** le filetage externe (4) ou interne (17 ; 26 ; 25) de la connexion présente un intervalle WTC séparant deux filets du filetage externe (4) ou interne (17 ; 26) de la connexion et **en ce que** la valeur du coefficient A est telle que :

$$0 < A \leq WTC / P1$$

**5.** Protecteur selon la revendication 2 ou 3, **caractérisé en ce que** le ou chaque filet de pas P1 présente une largeur de filet TW1, que le filetage externe (4 ; 25) ou interne (17 ; 26) de la connexion présente un intervalle WTC séparant deux filets du filetage de la connexion et **en ce que** la valeur du coefficient A est strictement supérieure à 0 et inférieure à une valeur Amax déterminée par l'équation suivante :

$$Amax = (WTC - TW1) / P1$$

**6.** Protecteur selon l'une des revendications 2 à 5 **caractérisé en ce que** la valeur de A est supérieure à 0,2.

**7.** Protecteur selon la revendication 2 ou 3, **caractérisé en ce que** A est compris entre 0,05 et 0,8.

**8.** Protecteur selon l'une des revendications précédentes, **caractérisé en ce que** la deuxième portion filetée (39) comprend de 1 à 3 filets de pas P2 et que la première portion filetée (38) comprend de 2 à 5 filets de pas P1.

**9.** Protecteur selon l'une des revendications précédentes, **caractérisé en ce que** le protecteur est un protecteur d'extrémité femelle et que la deuxième portion filetée (39) est située sur le corps du protecteur en amont de la première portion filetée (38).

**10.** Protecteur selon l'une des revendications précédentes, **caractérisé en ce que** au moins un filet de la deuxième portion filetée (39) est apte à être en contact avec au moins un filet imparfait du filetage externe (4 ; 25) ou interne (26) de l'extrémité du composant de joint tubulaire lorsque le protecteur est à l'état vissé sur l'extrémité du composant de joint tubulaire.

**11.** Protecteur selon l'une des revendications précédentes, **caractérisé en ce qu'**il comprend un corps principal (20), un joint d'étanchéité interne (32) et un joint d'étanchéité externe (33) agencés pour former des première et seconde étanchéités avec respectivement des surfaces annulaires interne (5 ; 28) et externe (27) de l'extrémité mâle (3) ou femelle (2) .

**12.** Protecteur selon la revendication 11 **caractérisé en ce qu'**au moins un des joints d'étanchéité interne (32) ou externe (33) est flexible.

**13.** Protecteur selon la revendication 12 **caractérisé en ce que** le joint d'étanchéité flexible est une collerette annulaire flexible.

**14.** Protecteur selon la revendication 13 **caractérisé en ce que** les deux joints d'étanchéité sont flexibles et sont des collerettes annulaires flexibles.

**15.** Protecteur selon la revendication 1 **caractérisé en ce qu'**il comprend un deuxième filetage interne ou externe et une troisième portion filetée comprenant au moins un filet de pas P3 différent de P2 et différent de P1.

**Patentansprüche**

**1.** Schutzvorrichtung (10) für das Einsteckende (3) oder Aufnahmeende (2) einer rohrförmigen Komponente zum Bohren oder für den Betrieb von Kohlenwasserstoffbohrlöchern, wobei das Einsteck- oder Aufnahmeende jeweils mit mindestens einem Außengewinde (4; 25) oder einem Innengewinde (17; 26) versehen ist, eine äußere ringförmige Oberfläche (27) und eine innere ringförmige Oberfläche (28) aufweist, die durch das mindestens eine Gewinde getrennt sind, wobei die Schutzvorrichtung (10) mindestens ein Gewinde (21) umfasst, das mindestens einen ersten Gewindeabschnitt (38) umfasst, der mindestens einen Gewindeschritt P1 umfasst, der durch Verschrauben mit dem Gewinde (4) des Einsteckendes (3) oder dem Gewinde (26) des Aufnahmeendes (2) zusammenwirken kann und **dadurch gekennzeichnet, dass** die Schutzvorrichtung einen zweiten Gewindeabschnitt (39) umfasst, der mindestens ein Gewinde mit einem Gewindeschritt P2 umfasst, der sich von P1 unterscheidet.

**2.** Schutzvorrichtung gemäß Anspruch 1, **dadurch gekennzeichnet, dass** der Gewindeschritt P2 derart ist, dass der Wert P2 folgender Gleichung entspricht:

$$P2 = P1 + A \times P1 \text{ wobei } A > 0$$

**3.** Schutzvorrichtung gemäß Anspruch 1, **dadurch gekennzeichnet, dass** der Gewindeschritt P2 derart ist, dass der Wert P2 folgender Gleichung entspricht:

$$P2 = P1 - A \times P1 \text{ wobei } A > 0$$

**4.** Schutzvorrichtung gemäß Anspruch 2 oder 3, **dadurch gekennzeichnet, dass** das Außengewinde (4) oder das Innengewinde (17; 26; 25) der Verbindung ein Intervall WTC aufweist, welches zwei Gewindegänge des Außengewindes (4) oder des Innengewindes (17; 26) der Verbindung trennt und dass der Wert des Koeffizienten A derart ist, dass:

$$0 < A \leq WTC / P1$$

**5.** Schutzvorrichtung gemäß Anspruch 2 oder 3, **dadurch gekennzeichnet, dass** der oder jeder Gewindeschritt P1 eine Gewindebreite TW1 aufweist, dass das Außengewinde (4; 25) oder Innengewinde (17; 26) der Verbindung ein Intervall WTC aufweist, das zwei Gewindegänge des Gewindes der Verbindung trennt und der Wert des Koeffizienten A in jedem Fall größer als 0 und kleiner als ein Wert Amax ist, der durch folgende Gleichung ermittelt wird:

$$Amax = (WTC - TW1) / P1$$

**6.** Schutzvorrichtung gemäß einem der Ansprüche 2 bis 5, **dadurch gekennzeichnet, dass** der Wert von A größer als 0,2 ist.

**7.** Schutzvorrichtung gemäß Anspruch 2 oder 3, **dadurch gekennzeichnet, dass** A zwischen 0,05 und 0,8 liegt.

**8.** Schutzvorrichtung gemäß einem der vorstehenden Ansprüche, **dadurch gekennzeichnet, dass** der zweite Gewindeabschnitt (39) 1 bis 3 Gewindegänge mit Gewindeschritt P2 umfasst und dass der erste Gewindeabschnitt (38) 2 bis 5 Gewindegänge mit Gewindeschritt P1 umfasst.

**9.** Schutzvorrichtung gemäß einem der vorstehenden Ansprüche, **dadurch gekennzeichnet, dass** die Schutzvorrichtung eine Schutzvorrichtung mit Aufnahmeende ist und der zweite Gewindeabschnitt (39) sich auf dem Körper der Schutzvorrichtung vor dem ersten Gewindeabschnitt (38) befindet.

**10.** Schutzvorrichtung gemäß einem der vorstehenden Ansprüche, **dadurch gekennzeichnet, dass** mindestens ein Gewindegang des zweiten Gewindeabschnitts (39) geeignet ist, in Kontakt mit mindestens einem unvollständigen Gewindegang des Außengewindes (4; 25) oder Innengewindes (26) des Endes der Komponente der rohrförmigen Verbindung zu sein, wenn die Schutzvorrichtung sich im verschraubten Zustand auf dem Ende der Komponente der Rohrverbindung befindet.

**11.** Schutzvorrichtung gemäß einem der vorstehenden Ansprüche, **dadurch gekennzeichnet, dass** sie einen Hauptkörper (20), eine innenliegende Dichtung (32) und eine außenliegende Dichtung (33) aufweist, die derart angeordnet sind, dass sie eine erste und zweite Dichtigkeit mit jeweils innenliegenden ringförmigen Flächen (5; 28) und außenliegenden ringförmigen Flächen (27) des Einsteckendes (3) oder des Aufnahmeendes (2) bilden.

**12.** Schutzvorrichtung gemäß Anspruch 11, **dadurch gekennzeichnet, dass** mindestens eine der innenliegenden (32) oder außenliegenden (33) Dichtungen flexibel ist.

**13.** Schutzvorrichtung gemäß Anspruch 12, **dadurch gekennzeichnet, dass** es sich bei der flexiblen Dichtung um einen flexiblen ringförmigen Kragen handelt.

**14.** Schutzvorrichtung gemäß Anspruch 13, **dadurch gekennzeichnet, dass** die beiden Dichtungen flexibel sind und flexible ringförmige Kragen bilden.

**15.** Schutzvorrichtung gemäß Anspruch 1, **dadurch gekennzeichnet, dass** sie ein zweites Innen- oder Außengewinde und einen dritten Gewindeabschnitt mit mindestens einem Gewindegang mit Gewindeschritt P3 umfasst, der sich von P2 und von P1 unterscheidet.

**Claims**

**1.** Protector (10) for a male end (3) or a female end (2) of a tubular drilling or production component for hydrocarbon wells, the male or female end being respectively provided with at least one external thread (4; 25) or internal thread (17; 26), an annular external surface (27) and an annular internal surface (28) separated by said at least one thread, the protector (10) comprising at least one thread (21) comprising at least one first threaded portion (38) comprising at least one thread with pitch P1 adapted to cooperate by screwing with the thread (4) of the male end (3) or the thread (26) of the female end (2), and **characterized in that** the protector comprises a second threaded portion (39) comprising at least one thread with a pitch P2 different from P1.

**2.** Protector according to Claim 1, **characterized in that** the pitch P2 is such that the value of P2 satisfies the following equation:

$$P2 = P1 + A \times P1 \text{ with } A > 0$$

**3.** Protector according to Claim 1, **characterized in that** the pitch P2 is such that the value of P2 satisfies the following equation:

$$P2 = P1 - A \times P1 \text{ with } A > 0$$

**4.** Protector according to Claim 2 or 3, **characterized in that** the external thread (4) or the internal thread (17; 26; 25) of the connection has an interval WTC separating two threads of the external thread (4) or the internal thread (17; 26) of the connection and **in that** the value of the coefficient A is such that:

$$0 < A \leq WTC / P1$$

**5.** Protector according to Claim 2 or 3, **characterized in that** the or each thread with pitch P1 has a thread with TW1, the external thread (4; 25) or the internal thread (17; 26) of the connection has an interval WTC separating two threads of the connection thread and **in that** the value of the coefficient A is strictly greater than 0 and less than a value Amax determined by the following equation:

$$Amax = (WTC - TW1) / P1$$

**6.** Protector according to any one of Claims 2 to 5, **characterized in that** the value of A is greater than 0.2.

**7.** Protector according to Claim 2 or 3, **characterized in that** A is between 0.05 and 0.8.

**8.** Protector according to any one of the preceding claims, **characterized in that** the second threaded portion (39) comprises 1 to 3 threads with pitch P2 and the first threaded portion (38) comprises 2 to 5 threads with pitch P1.

**9.** Protector according to any one of the preceding claims, **characterized in that** the protector is a female end protector and the second threaded portion (39) is situated on the body of the protector on the upstream side of the first threaded portion (38).

**10.** Protector according to any one of the preceding claims, **characterized in that** at least one thread of the second threaded portion (39) is adapted to be in contact with at least one incomplete thread of the external thread (4; 25) or the internal thread (26) of the end of the tubular joint component when the protector has been screwed onto the end of the tubular joint component.

**11.** Protector according to any one of the preceding claims, **characterized in that** it comprises a principal body (20) and an internal seal (32) and an external seal (33) that are adapted to make first and second seals with annular internal surfaces (5; 28) and annular external surfaces (27) of the male end (3) or the female end (2), respectively.

**12.** Protector according to Claim 11, **characterized in that** the internal seal (32) and/or the external seal (33) is flexible.

**13.** Protector according to Claim 12, **characterized in that** the flexible seal is a flexible annular ring.

**14.** Protector according to Claim 13, **characterized in that** the two seals are flexible and are flexible annular rings.

**15.** Protector according to Claim 1, **characterized in that** it comprises a second internal or external thread and a third threaded portion comprising at least one thread with pitch P3 different from P2 and different from P1.

EP 3 209 850 B1

Fig. 1

Fig. 2

15

Fig. 3

Fig. 4

Fig. 5

Fig. 6

## RÉFÉRENCES CITÉES DANS LA DESCRIPTION

**Documents brevets cités dans la description**

- US 6027145 A
- EP 1211451 A
- FR 2892174
- FR 2979968
- US 30647 A
- US 20100038904 A
- WO 2011140014 A
- EP 2126449 A